# EUROPEAN PATENT APPLICATION

(11) **EP 1 645 499 A2**
(43) Date of publication of application: **12.04.2006**
(21) Application number: 05100314.3
(22) Date of filing: 19.01.2005
(51) Int. Cl.: B63B 1/36

(54) **Boat with plurality of floats freely rotatable like wheels**

(30) Priority: 07.10.2004 IT RM20040482
(71) Applicant: Franchetta, Mario, 80128 Napoli (IT)
(72) Inventor: Franchetta, Mario, 80128 Napoli (IT)
(74) Representative: Leone, Mario

(57) **Abstract**

Energy-saving boat without hull, consisting of a platform completely lifted out of the liquid medium by means of rotating floats fixed below the platform with ball bearings. Owing to the lift effect of such floats, the boat will glide over the liquid surface without ploughing it; hence, the advance will take place almost completely in air, with huge energy savings In short, the principle of the wheel in land transport is extended to navigation.

## Description

The present invention refers to a boat without hull, and more particularly to a floating supporting structure for supporting a boat.

As it is known, from a building standpoint the main element of a boat is the hull, carrying out different functions. First of all it is a structural element of the boat, and moreover it ensures the floating, by providing the required buoyancy, the advance in the liquid medium, by means of a suitable hydrodynamic shape, and it provides a supporting structure onto which there may be implemented cabins, motor vehicle garages, cargo holds, etc.

Over time, the hull has continually been improved in its structure and in its hydrodynamic qualities, with the aim of attaining ever-higher navigation speeds with the least viable quantity of propulsive energy spent.

However, these improvements entail a limitation set by the physical features of the liquid medium, which resists motion with its density and viscosity much higher than those of air.

In order to make a boat attaining an effective and relevant energy saving, the concept of hull was first criticized and then superseded.

During motion, a hull is called to displace a liquid volume proportional to the dimensions of its immersed portion. Moreover, there will also be a resistance due to friction with the liquid, the generation of a wave train due to the motion of the hull and the generation of vortexes due to propeller rotation. These factors all contribute to increase the overall resistance to the in-water advance of the hull.

Therefore, evidently the energy expenditure for increasing the speed rapidly becomes very high with the increasing of the latter.

In order to increase speed, save energy and overcome the limits set by the liquid medium, designers tend to lift the boat structure as much as possible out of the water so that the motion may take place mainly and as much as possible in air.

Hence, there have been developed planing bottom hydroplanes, hovercrafts and boats based on the common principle of letting the hull emerge from water as much as possible when exceeding a set speed. However, in order to attain such a result high-power engines of vast energy expenditure are required. Accordingly, such a principle is not usually applicable to large-sized ships such as the big merchant ones, it being restricted to the rapid short-haul transport of passengers. Moreover, boats navigated according to such a principle (planing hull) usually run into trouble in case of choppy sea.

Therefore, object of the present invention is to solve said problems, by providing a floating supporting structure as defined in claim 1.

Moreover, the present invention also refers to a boat as defined in claim 10.

In addition, the present invention also refers to a float as defined in claim 24.

Aspects and secondary features of the present invention are defined in the dependent claims thereof.

A structure according to the present invention entails several advantages with respect to the classical boat building technique.

First of all, such a structure nearly totally eliminates all those frictions and energy wastes typically occurring during the motion of a known boat in a liquid medium (creation of boundary layer, turbulence and generation of wake and wave trains, displacement of water masses due to the advance of the hull, etc).

This entails the possibility of attaining a very high efficiency, attaining high speeds with no need of propulsive thrusts oversized with respect to the boat tonnage.

Two additional significant advantages of the structure proposed with the present invention are the economy and modularity of building.

In fact, by using the present invention, the building of a boat could be subdivided into distinct steps in a manner highly advantageous with respect to the traditional building methods. The floating supporting structure and the boat body (cabins, cargo holds, etc.) could follow wholly independent building routes and be assembled only once the building has ended, thereby evidently making all yard operations simpler and optimising both cost-related issues and techno-functional aspects.

Moreover, just from a building standpoint, the supporting structure, made of mere trusses and provided with floats to attain the required positive buoyancy, is it also particularly simple to build with respect to a traditional hull.

A further advantage lies in that each of the floats forms a distinct watertight compartment; hence, in light of their numerousness, the boat is substantially unsinkable, all to the advantage of safety, even with a choppy sea.

Further advantages, as well as the features and the operation modes of the present invention will be made apparent in the following detailed description of preferred embodiments thereof, given by way of example and without limitative purposes. Reference will be made to the figures of the annexed drawings, wherein:
- figure 1 is a perspective view of a supporting structure according to the present invention;
- figure 2 is a perspective view of the supporting structure of figure 1 with a protecting cover;
- figure 3 is a perspective view of a specific embodiment of one of the beam elements of a supporting structure according to the present invention;
- figure 4 illustrates an aspect of the operation of a structure according to the present invention;
- figures 5A and 5B are perspective views of a boat according to the present invention;
- figures 6 and 7 are two plan views, respectively from the top and from the bottom of the boat of figure 5A; and
- figure 8 is a rear view of the boat of figure 5A.

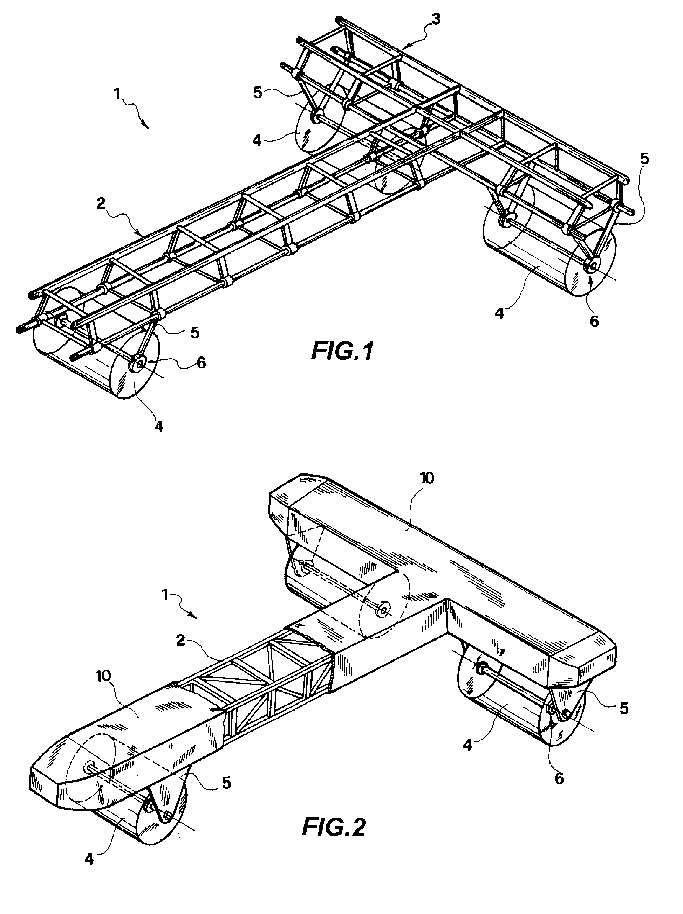

With initial reference to figures 1 and 2, hereinafter it will be described a floating supporting structure 1 that, as it will be detailed below, is apt to support a boat body in water.

The structure 1 comprises a first longitudinal beam element 2, arranged along the length of what will eventually be the boat and extending from stem to stem of the latter.

A second beam element 3 is transversely connected to the first beam element 2. The assembly of the two elements 2 and 3 forms a structure having the shape of a T in which the longitudinal element 2 advantageously has a greater length with respect to the transverse element 3.

In fact, a T-shaped structure having a greater dimension in the sense of motion is that deemed the most suitable for making a boat intended to navigate seas and climb over waves. Indeed, a longitudinal element sufficiently long (with respect to the dimensions of the boat) easily and safely overcomes wave motion, whereas an astern transverse element ensures greater lateral stability minimizing the rolling.

Of course, the structure could also be differently shaped, e.g., H-shaped or Δ-shaped, though maintaining the length/width ratios as indicated.

The beam elements are preferably made by mechanical coupling of lattice modules, in a manner such as to make a lattice structure, preferably metallic or of plastics materials.

The structure further comprises a plurality of floats 4 connected thereto via respective supports 5.

In particular the floats 5 have an axially symmetrical shape, with one axis of rotation.

Such floats 4 further comprise rotating means for connecting to the structure, e.g. a rotating shaft, apt to allow the rotation of the float itself about its own axis.

The floats, made of plastics or metallic material, are preferably made of a cylindrical or toroidal shape and are rotatably mounted on supports 6, by means of rolling devices having a low friction coefficient, e.g., ball bearings. Thus, the floats 5 can freely rotate about their own axis, arranged transversely with respect to said first beam element (whose direction coincides with the navigation direction).

The function of the floats 5 is that of keeping the entire supporting structure, and the boat body supported thereby, completely lifted out of the liquid medium. Moreover, during navigation the rotating floats 5 perform functions equivalent to those of a wheel for a dry land vehicle.

Of course, the number of floats 5 and their arrangement in support of the structure 1 will be determined according to the specific needs of the case at issue, the tonnage of the boat that is to be built, etc., with the aim of making the boat practically unsinkable to the advantage of safety, even with a choppy sea, and to lift as much as possible the boat out of the water during navigation.

Advantageously, the supporting structure 1 could be coated with a protecting cover 10.

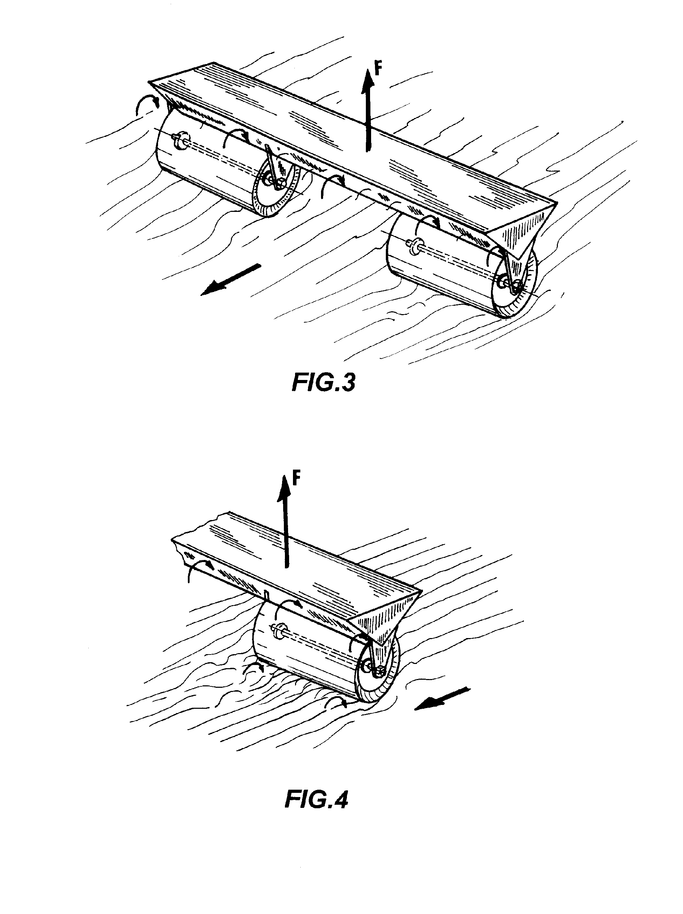

With reference to figure 3, hereinafter it will be described a preferred embodiment of the structure, in which the transverse beam element 3, usually arranged astern, is entirely coated by the cover or made in the form of a boxed body and has a substantially triangular sectional shape with a vertex aimed at the water.

Thus, the astern transverse element 3 will have the front face tilted in the sense of motion so as to push downward the flows of air and water impinging thereon during motion. Thus, it is augmented the lift effect (increasing with the speed increase) that helps to lift the boat.

Instead, with reference to figure 4, it is illustrated a further advantageous aspect of the operation of the present invention.

In particular, during the advance of the boat the main friction will be the rolling one, located at the ball bearings with which the floats are fixed to the structure, whereas the displacement of liquid will be very small with respect to that caused by a displacement or planing hull. During motion, the immersed portion of each float tends to push downward the opposite water mass. This generates a reaction force F pushing upward the float and therefore the entire structure to which it is connected. Thus, it is generated a relevant lift effect at the interface between the cylindrical floats and the liquid medium. In short, a lift effect is innovatively produced and exploited.

The floats can easily be mass-produced, with dimensions all alike and with inexpensive and resistant materials, e.g. from sheet steel, reinforced plastics or even as a pneumatic structure. The simple cylindrical shape with one axis of rotation makes them very economical, with the option of a high-volume production thereof.

Advantageously, one or more of said floats 5 is mounted on the respective supports by means of a corresponding suspension device, e.g., a system of springs and hydraulic and/or pneumatic dampers. Thus, the impact with waves may be dampened, making the movement of the boat more comfortable.

Moreover, advantageously one or more of said floats could have projecting flaps formed onto its surface and arranged in a manner such as to facilitate rolling in the liquid medium.

The structure according to the present invention attains a particularly high effectiveness. In fact, while in the usual planing bottoms the lift effect is attained by a flow of the liquid along the suitably tilted surface of the hull (and therefore with unavoidable generation of friction, of remarkable turbulence and energy dissipation) in the proposed boat the flow is nearly absent by virtue of the rotation of the surface of the floats into contact with the liquid. As speed increases, there will ensue a corresponding increase of the lift effect and then a state in which the boat merely grazes the water surface. Therefore the motion takes place almost completely in air, with huge energy savings, great increase in speed, greatly reduced generation of wake in the liquid medium. Moreover, friction will be generated almost exclusively as rolling friction in the bearings with which the floating cylinders are fixed to the structure.

As mentioned above, the structure according to the present invention, as described hereto, acts as support for a boat body, in order to make an absolutely innovative boat.

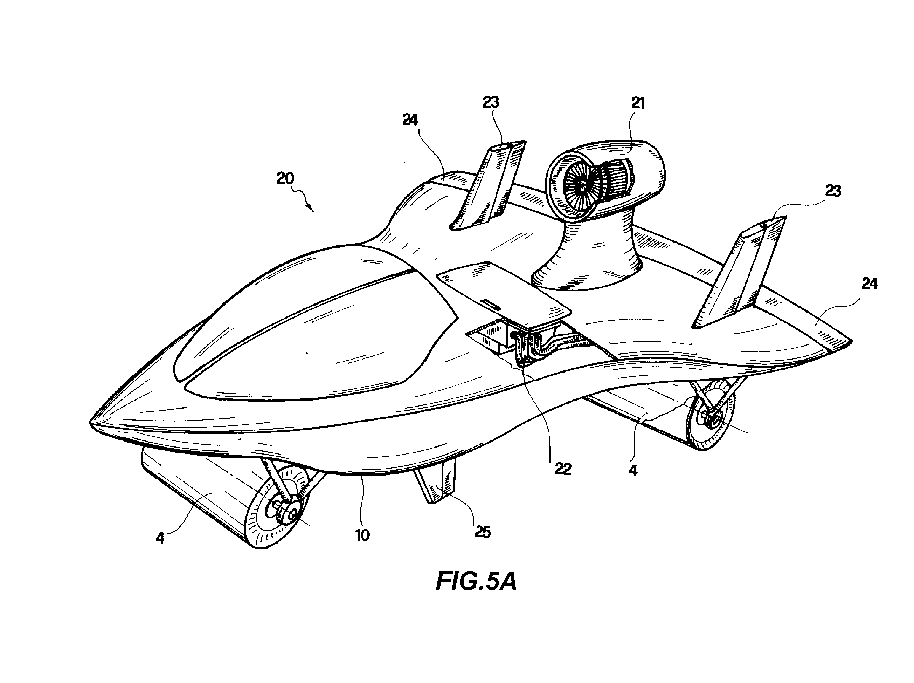

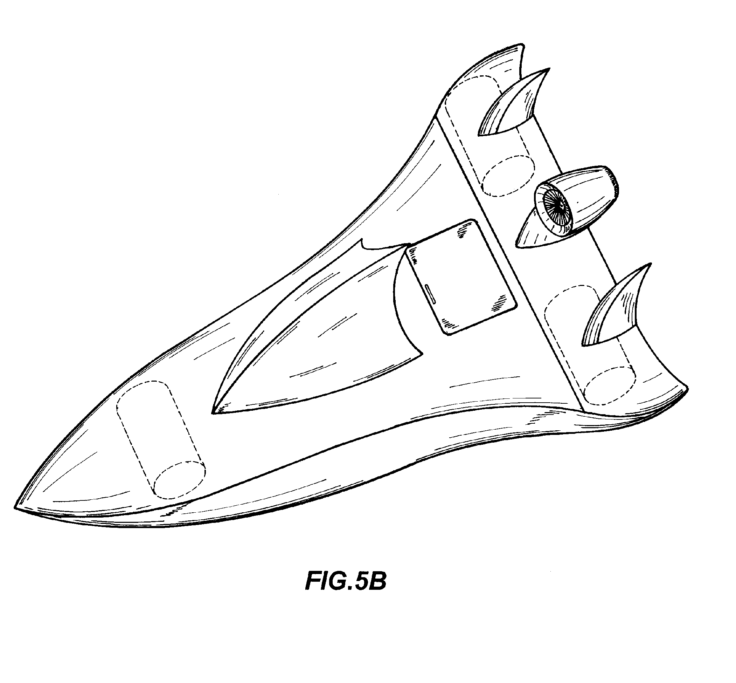

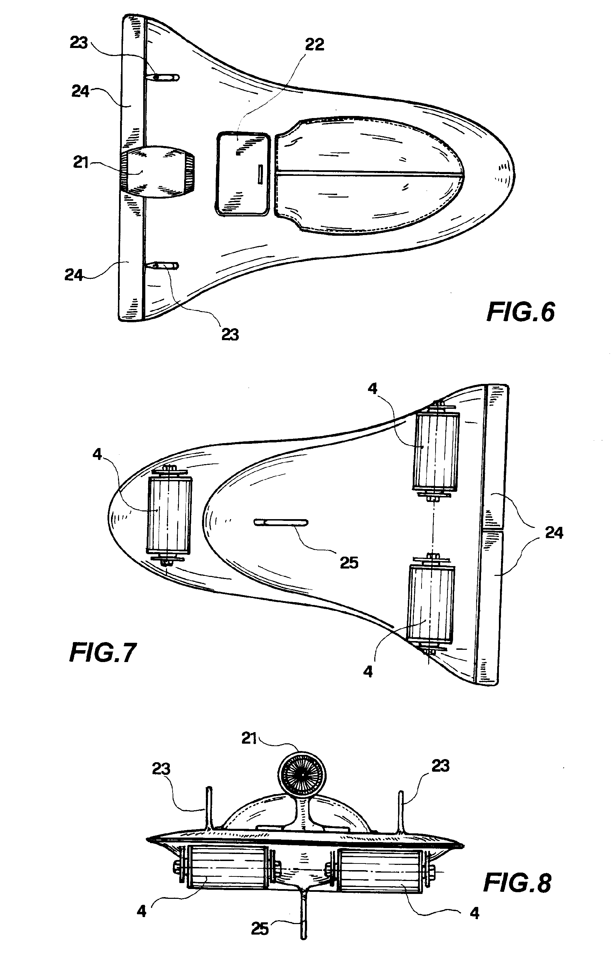

Making reference now to figures 5 to 8, it will be described, purely by way of example, a boat comprising a structure as hereto described.

A boat 20 according to the present invention comprises propelling means 21, 22 for the navigating thereof.

In particular, the propelling means comprises a first aeronautical unit 21, operating above water surface, e.g. a turbojet, propeller, or turbo-propeller engine.

This choice seems the most appropriate for such a boat, as it allows to interact not with water but solely with air, offering much lower resistance and viscosity. Other advantages of this solution are the lightness of weight and the great horsepower installable to the advantage of the boat speed.

Moreover, preferably the propelling unit will be centrally located since, taking into account also the weight of the engine, an astern location thereof could prove dangerous concomitantly to the wave-induced rising of the stem.

According to the present invention, the boat 20 comprises first aerodynamic directional means 23, 24.

In particular, said first directional means comprises one or more vertical rudders 23 and one or more horizontal flaps 24 for steering the boat.

Furthermore, there could be provided one or more aerodynamic appendages apt to stabilize the boat during navigation, above all at high speeds.

According to the preferred embodiment, the boat according to the present invention comprises a second inboard or outboard nautical engine unit 22, advantageously having a stem foot liftable with respect to the water surface.

Such a second engine unit is particularly useful for low-speed navigation or to increase the steerability of the boat, e.g., in harbours.

In this context, there is further provided second hydrodynamic directional means 25, e.g. one or more directional fins, apt to be immersed in water when navigating at a low speed and liftable with respect to the surface of the water when navigating at a high speed.

Of course, there could also be provided that the propelling means comprises one or more masts and a set of sails.

According to the preferred embodiment of boat, the supporting structure is provided with a cover 10 shaped in a manner such as to have a low air penetration coefficient in order to minimize frictions. Moreover, the shapes of the side bulkheads of the cover 10 are such as to convey anyhow the flows of air and water originated by the downward navigating, always in order to maximize the rising effect due to the lift.

Evidently, the boat could have shapes different from the ones described hereto, according to the boat typology and/or of the specific building needs. In fact, in its main features such a structure is susceptible of being implemented as a small yacht, privileging speed, as well as a large cargo and passenger ship, fully retaining the ease of design and building.

The present invention has hereto been described according to preferred embodiments thereof, given by way of example and without limitative purposes.

It is understood that other embodiments may be envisaged, all to be construed as falling within the protective scope thereof, as defined by the appended claims.

## Claims

1. A floating supporting structure apt to support a boat body in a liquid medium, comprising a first longitudinal beam element and a second beam element transversely connected to said first beam element; and a plurality of substantially cylindrical floats apt to support said structure, each of said floats being rotatably mounted on respective supports connected to said structure in a manner such as to freely rotate about its own axis located transversely with respect to said first beam element.

2. The floating supporting structure according to claim 1, wherein each of said first and second beam elements is made of a a plurality of lattice modules rigidly connected thereamong.

3. The floating supporting structure according to claim 1 or 2, wherein said structure has the shape of a T in which said first longitudinal beam element has a length greater with respect to that of said second beam element.

4. The floating supporting structure according to any one of the preceding claims, wherein each of said floats is mounted on the supports by means of rolling devices having a low friction coefficient.

5. The floating supporting structure according to claim 4, wherein said rolling devices having a low friction coefficient are ball bearings.

6. The floating supporting structure according to any one of the preceding claims, further comprising a cover of said T-shaped structure.

7. The floating supporting structure according to any one of the preceding claims, wherein said second beam element has a substantially triangular sectional shape with a vertex aimed at the liquid medium.

8. The floating supporting structure according to any one of the preceding claims, wherein one or more of said floats is mounted on the respective supports by means of a corresponding suspension device.

9. The floating supporting structure according to any one of the preceding claims, wherein one or more of said floats has flaps projecting from its surface, arranged in a manner such as to facilitate rolling in the liquid medium.

10. A boat comprising a boat body, **characterised in that** it comprises a floating supporting structure according to any one of the preceding claims.

11. The boat according to claim 10, further comprising propelling means for navigating said boat.

12. The boat according to claim 11, wherein said propelling means comprises a first aeronautical unit, operating above the surface of the liquid medium.

13. The boat according to claim 12, wherein said first aeronautical engine unit is a turbojet, propeller or turbo-propeller engine.

14. The boat according to one of the claims 11 to 13, further comprising first aerodynamic directional means.

15. The boat according to claim 14, wherein said first aerodynamic directional means comprises one or more vertical rudders for controlling the boat.

16. The boat according to claim 14 or 15, wherein said first aerodynamic directional means comprises one or more horizontal flaps for controlling the boat.

17. The boat according to one of the claims 10 to 16, further comprising one or more aerodynamic appendages apt to stabilize the boat during navigation.

18. The boat according to one of the claims 11 to 17, wherein said propelling means comprises a second inboard or outboard nautical engine unit.

19. The boat according to claim 18, wherein said second engine unit comprises a stem foot liftable with respect to the surface of the liquid medium.

20. The boat according to one of the claims 11 to 19, wherein said propelling means comprises one or more masts and a set of sails.

21. The boat according to one of the claims 10 to 20, further comprising second hydrodynamic directional means.

22. The boat according to claim 21, wherein said second hydrodynamic directional means comprises one or more directional fins apt to be immersed in water.

23. The boat according to claim 22, wherein said directional fms are liftable with respect to the water surface.

24. A supporting float of a supporting structure for boats, having an axially symmetrical shape and **characterised in that** it comprises rotating means for connecting to said structure apt to allow the rotation of the float about its own axis.

25. The float according to claim 24, wherein said axially symmetrical shape is substantially cylindrical.

26. The float according to claim 24, wherein said axially symmetrical shape is substantially toroidal.

27. The float according to claim 25 or 26, made from plastics material.

28. The float according to claim 25 or 26, made from metallic material.

29. The float according to claim 25 or 26, made with a pneumatic structure.

30. The float according to one of the claims 24 to 29, wherein said rotating means for connecting comprises a rotating shaft arranged along the axis of the float.

31. The float according to one of the claims 24 to 30, wherein said rotating means for connecting comprises one or more ball bearings, apt to reduce frictions during rotation.
